# EUROPÄISCHE PATENTSCHRIFT

(11) **EP 4 067 055 B1**
(45) Veröffentlichungstag und Bekanntmachung des Hinweises auf die Patenterteilung: **20.12.2023**
(21) Anmeldenummer: 22157170.6
(22) Anmeldetag: 17.02.2022
(51) Int. Cl.: B29D 30/00, B29D 30/72

(54) **VERFAHREN ZUR PRÜFUNG VON GRAVIERTEN CODES AUF OBERFLÄCHEN VON REIFENTEILEN**
METHOD FOR TESTING ENGRAVED CODES ON SURFACES OF TYRE PARTS
PROCÉDÉ DE VÉRIFICATION DES CODES GRAVÉS SUR LES SURFACES DES PARTIES DE PNEUS

(30) Priorität: 30.03.2021 DE 102021203199
(43) Veröffentlichungstag der Anmeldung: 05.10.2022
(73) Patentinhaber: Continental Reifen Deutschland GmbH, 30165 Hannover (DE)
(72) Erfinder: Rudolph, Marco, 30165 Hannover (DE)
(74) Vertreter: Continental Corporation

(56) Entgegenhaltungen:
- EP-A1- 3 147 114
- EP-A1- 3 495 166
- DE-A1-102018 123 966

## Beschreibung

Die Erfindung betrifft ein Verfahren zur Prüfung von gravierten QR Codes auf Oberflächen von Reifenteilen, etwa im Zuge der Qualitätskontrolle.

In jüngerer Zeit sind vermehrt Fahrzeugluftreifen auf den Markt gekommen, die an einer geeigneten Position, beispielsweise auf der weitgehend vor Beschädigung geschützten Reifenseitenwand, individuelle QR Codes oder Datamatrix-Codes zur Reifenkennzeichnung aufweisen. Derartige QR Codes sind maschinenlesbar und können beispielsweise reifenspezifische Daten enthalten, die beispielsweise für die Produktionssteuerung bei Komplettradzulieferbetrieben oder zur Identifikation im Handel oder direkt am Fahrzeug genutzt werden können.

Unter einer Oberfläche eines Reifens wird erfindungsgemäß sowohl die Oberfläche eines fertigen Reifens, beispielsweise im Bereich der Seitenwand, als auch die Oberfläche eines Reifenbauteils im Zuge der Reifenherstellung, beispielsweise der Laufstreifen, verstanden.

Um die individuellen QR Codes dauerhaft auf die Oberfläche aufzubringen, wird anstelle der beispielsweise aus der Verpackungsindustrie bekannten Bedruckung der Oberfläche mit geeigneter Tinte eine Markierung mit einer Vielzahl von definierten Vertiefungen in die Reifenoberfläche durch ein Gravurverfahren eingebracht, beispielsweise durch selektiven Materialabtrag mit einem Laser oder per Matrize bei der Formgebung, wobei die Vertiefungen gegenüber der angrenzenden ursprünglichen und nicht vertieften Reifenoberfläche einen Kontrast erzeugen, der den gewünschten maschinenlesbaren QR Code dauerhaft darstellt. Für eine zuverlässige und dauerhafte Maschinenlesbarkeit muss sichergestellt sein, dass die Gravur in einer hinreichenden Tiefe eingebracht wird, um den gewünschten Kontrast zu erzeugen, wobei andererseits auch vorgegebene Maximaltiefen nicht überschritten werden dürfen, um durch den Materialabtrag nicht tieferliegende Strukturen des Reifens, wie Gewebelagen, zu beschädigen oder zu beeinträchtigen. Der insbesondere mittels Laser eingebrachte gravierte QR Code muss von daher eine Tiefe aufweisen, die in einem vorbestimmten, von einem Minimal- und einem Maximalwert begrenzten Sollbereich liegt. Dies muss bei Erstellung der Gravur und auch bei zyklischen Checks der Produktion zumindest stichprobenweise geprüft werden, insbesondere bei produktionsbedingten Veränderungen der Reifenmischung, beim Einrichten der verwendeten Gravurmaschine etc. und muss ferner bei Qualitätsaudits dokumentiert sein. Insbesondere bei Einsatz von Lasern zur Herstellung der gravierten QR Codes kann es zum Beispiel durch Drift oder Alterung des verwendeten Lasers zu Abweichungen kommen.

Bislang wurde dazu im Rahmen der laborgestützten Qualitätsprüfung eine aufwändige Vermessung der gravierten QR Codes unter einem Mikroskop durchgeführt, was verbesserungswürdig erscheint.

Die Patentschrift EP 3 147 114 A1 offenbart die Merkmale des Oberbegriffs des unabhängigen Anspruchs 1.

Aufgabe der Erfindung ist es, ein für die Durchführung derartiger Prüfungen geeignetes Verfahren vorzuschlagen, welches mit geringem Aufwand in kurzer Zeit eine zuverlässige Prüfung der gravierten QR Codes auf die Einhaltung der geforderten Tiefenstruktur in Bezug auf einen vorbestimmten Sollbereich ermöglicht, sodass es in den laufenden Produktionsbetrieb integrierbar ist.

Zur Lösung der gestellten Aufgabe wird erfindungsgemäß ein Verfahren gemäß den Merkmalen des Patentanspruches 1 vorgeschlagen.

Vorteilhafte Ausgestaltungen und Weiterbildungen der Erfindung sind Gegenstand der abhängigen Ansprüche.

Erfindungsgemäß wird vorgesehen, dass auf die den QR Code bildende Markierung ein Muster aus Lichtstreifen projiziert und das projizierte Muster nach dem Prinzip der Streifenlichtprojektion von mindestens einer Kamera aufgenommen und daraus ein Höhenprofil des Musters erzeugt wird, wobei der Höhenunterschied der enthaltenen Vertiefungen zur angrenzenden Reifenoberfläche gemessen und mit einem vorbestimmten Sollbereich verglichen wird.

Mit dem erfindungsgemäßen Verfahren ist es möglich, eine zuverlässige Messung und Prüfung der Tiefe von lasergravierten QR Codes auf einer Oberfläche, zum Beispiel der Reifenseitenwand im Rahmen eines Qualitätsprüfungsschrittes in der Produktion anhand des ermittelten Höhenunterschiedes durchzuführen.

Als angrenzende Oberfläche für die Messung des Höhenunterschiedes kann z.B. um den QR Code herum die sog. "Quiet Zone" (ISO/IEC 18004), also ein brach liegender und nicht gravierter oder markierter Bereich herangezogen werden. Dieser Bereich liefert Stützstellen zur Berechnung einer dreidimensionalen Interpolationsfunktion (Approximation). Es können aber auch andere geeignete Referenzpunkte auf der Oberfläche benachbart zum eingebrachten QR Code ausgewählt werden.

Nach einem Vorschlag der Erfindung wird das Muster aus Lichtstreifen als Abfolge einzelner Lichtstreifen auf die Markierung projiziert, wobei die Lichtstreifen vorzugsweise in einer parallelen Ausrichtung zueinander auf die Oberfläche der Markierung projiziert werden können.

Entsprechende Messgeräte, die ein Muster aus Lichtstreifen auf eine Oberfläche projizieren und das projizierte Muster nach dem Prinzip der Streifenlichtprojektion mit mindestens einer Kamera aufnehmen und daraus ein äußerst fein aufgelöstes Höhenprofil in einer Auflösung von beispielsweise 12 µm erstellen, sind beispielsweise aus der Halbleiterfertigung bekannt. Diese verwenden beispielsweise zwei, gegebenenfalls aber auch bis zu sechs oder acht um einen zentralen Projektor angeordnete Kameras, wobei jedoch auch Bauformen mit zwei Projektoren und einer zentralen Kamera bekannt sind. Derartige Messgeräte können im Rahmen des erfindungsgemäßen Verfahrens verwendet werden, um eine Markierung mit einer Vielzahl von definierten Vertiefungen, die einen Kontrast als maschinenlesbarer QR Code erzeugen, auf die Einhaltung von Sollbereichsvorgaben für die Tiefe der einzelnen Vertiefungen bzw. den Höhenunterschied zur angrenzenden nicht gravierten Reifenoberfläche zu prüfen.

Nach einem Vorschlag der Erfindung wird das erzeugte Höhenprofil einer Korrekturberechnung zur Eliminierung von eventuell durch die Krümmung der Reifenoberfläche im Bereich der Markierung bedingten Höhenunterschieden unterworfen, beispielsweise bei einer Markierung auf der Seitenwand sowohl in lateraler als auch in Umfangsrichtung, um einen entsprechenden digitalisierten QR Code aus dem Höhenprofil zu generieren, aus dem anschließend eine lediglich die Vertiefungen umfassende dreidimensionale Abbildung der Markierung erzeugt werden kann. Diese dient sodann als Basis, um die einzelnen Tiefen im Bereich jeder Vertiefung aus den vorhandenen Höhenunterschieden zur umgebenden Reifenoberfläche zu ermitteln und mit dem Sollbereich zu vergleichen.

Hierbei kann nach einer Ausführungsform der Erfindung vorgesehen sein, jeweils den höchsten und tiefsten Punkt jeder Vertiefung der dreidimensionalen Abbildung anhand der Form derselben zu ermitteln, hieraus den Höhenunterschied zu berechnen und sodann mit dem Sollbereich zu vergleichen. Mit den ermittelten Tiefenwerten kann auch ein Histogramm erzeugt und daraus eine Normalverteilung erzeugt werden. Es können alle Tiefenwerte des QR Codes (maximal 29x29) genutzt werden, um Kennwerte für alle Vertiefungen des Codes und damit den Code als solchen erzeugen. Dazu ist es zweckmäßig, das Maximum und Minimum auszugeben. Ferner geben der Mittelwert sowie die Standardabweichung bzw. Varianz Aufschluss über die Verteilung der Tiefenwerte über den Code, beispielsweise ob alle Vertiefungen gleichmäßig ausgebildet sind, ob sie auseinanderlaufen, der Mittelwert langfristig sinkt etc.

Alternativ kann auch vorgesehen sein, die dreidimensionale Abbildung in eine regelmäßige Abfolge von Querschnittsprofilen zu zerlegen und die einzelnen Höhenunterschiede der Vertiefungen in den Querschnittsprofilen mit dem Sollbereich zu vergleichen.

Schließlich kann nach einem weiteren Vorschlag der Erfindung aus dem gewonnenen Höhenprofil des Musters auch ein entsprechender QR Code berechnet werden und mit dem vorgegebenen QR Code verglichen werden, um die korrekte Lesbarkeit desselben zu verifizieren.

In jedem Fall dient der im Rahmen des erfindungsgemäßen Verfahrens vorgenommene Vergleich der Höhenunterschiede der enthaltenen Vertiefungen in der Markierung zur angrenzenden Reifenoberfläche mit dem vorbestimmten Sollbereich dazu, sicherzustellen, dass jeder einzelne Vertiefung des gravierten QR Code in einer innerhalb des Sollbereichs liegenden Tiefe ausgeführt ist, um einen für die Maschinenlesbarkeit ausreichenden dauerhaften Kontrast sicherzustellen und andererseits ungewollte Beschädigungen der Reifenstruktur auszuschließen.

Sollte im Rahmen des Sollbereichsvergleichs eine Abweichung dahingehend festgestellt werden, dass Vertiefungen des gravierten QR Codes in einer zu geringen Tiefe oder einer zu großen Tiefe ausgeführt sind, kann eine entsprechende Warnung ausgegeben werden, die für eine Korrektur der Produktion der gravierten QR Codes oder zur Zuordnung als Ausschuss verwendet werden kann.

Weitere Einzelheiten des erfindungsgemäßen Verfahrens werden nachfolgend anhand eines Ausführungsbeispiels in der Zeichnung erläutert. Es zeigen:
- Figur 1: eine Reifenseitenwand mit einer Markierung in Form eines gravierten QR Codes;
- Figur 2: ein nach dem erfindungsgemäßen Verfahren erzeugtes Höhenprofil;
- Figur 3: eine lediglich die Vertiefungen umfassende und hinsichtlich Krümmung der Reifenoberfläche korrigierte dreidimensionale Abbildung der Markierung;
- Figur 4: eine einzelne Vertiefung gemäß Figur 3;
- Figur 5: ein einzelnes Querschnittsprofil der dreidimensionalen Abbildung gemäß Figur 3.

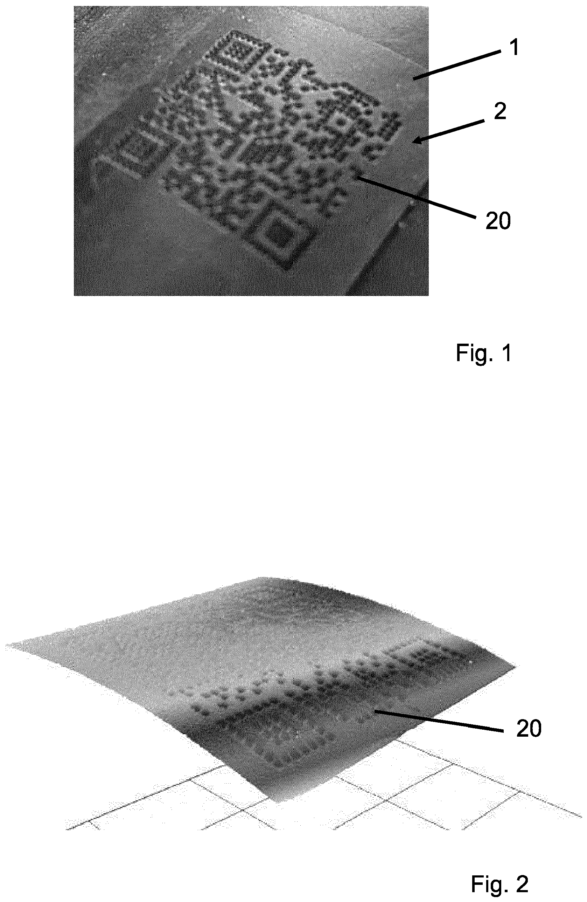

Aus der Figur 1 ist beispielhaft ein Fahrzeugluftreifen 1 im Bereich der Reifenseitenwand dargestellt, der eine als QR Code ausgeführte Markierung 2 aufweist, die mittels Einwirkung eines Laserstrahls durch selektiven Abtrag von Material der Reifenseitenwand in die Reifenoberfläche eingraviert worden ist. Man erkennt, dass bei ausreichender Tiefe der einzelnen Vertiefungen 20 des Datamatrix-Codes ein starker Kontrast entsteht, der es ermöglicht, den QR Code vergleichbar einem Druck maschinell auszulesen.

Um im Rahmen der Herstellung derartiger Markierungen 2 sicherzustellen, dass die einzelnen Vertiefungen 20 mit einer für den gewünschten Kontrast ausreichenden Tiefe, andererseits aber auch lediglich in einer solchen Tiefe, die den darunterliegenden Strukturen des Fahrzeugreifens keinen Schaden zufügt, ausgeführt werden, wird ein zerstörungsfreies Prüfverfahren vorgeschlagen, bei welchem die erstellte Markierung mittels handelsüblich erhältlicher Messgeräte 3-dimensional abgetastet wird. Dazu wird auf die den QR Code darstellende Markierung 2 ein Muster aus Lichtstreifen beispielsweise von einer LED-Lichtquelle oder einem Laserprojektor projiziert und das Muster nach dem Lichtschnittprinzip von mindestens einer Kamera aufgenommen, sodass ein Höhenprofil des Musters erzeugt wird. Ein solches Höhenprofil des Musters ist in der Figur 2 dargestellt.

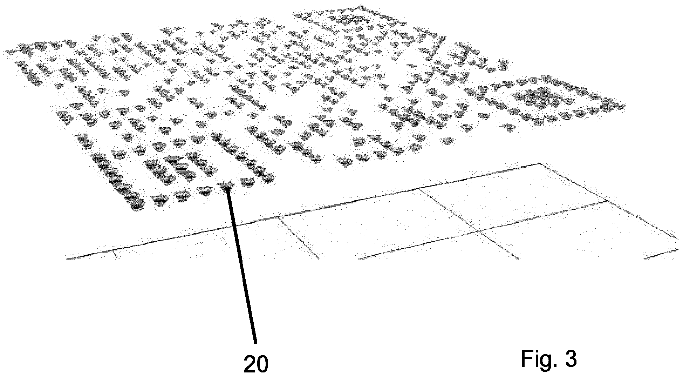

Anschließend kann durch einen geeigneten Algorithmus eine Korrekturberechnung zur Eliminierung von durch die Krümmung der Reifenoberfläche im Bereich der Markierung bedingten Höhenunterschieden durchgeführt werden, um das zunächst noch gekrümmte Höhenprofil gemäß Figur 2 in eine ebene Erstreckung umzurechnen. Sodann können die im Höhenprofil enthaltene Vertiefungen 20 aus der Umgebung herausgefiltert werden, sodass eine lediglich die Vertiefungen 20 umfassende dreidimensionale Abbildung der Markierung 2 erzeugt wird, wie aus der Figur 3 beispielhaft ersichtlich.

In dieser dreidimensionalen Abbildung gemäß Figur 3 kann sodann der Höhenunterschied der enthaltenen Vertiefungen 20 zur angrenzenden Reifenoberfläche gemessen werden und mit dem vorbestimmten Sollbereich, der von den Ober- und Untergrenzen der geforderten Tiefen der einzelnen Vertiefungen beschränkt wird, verglichen werden.

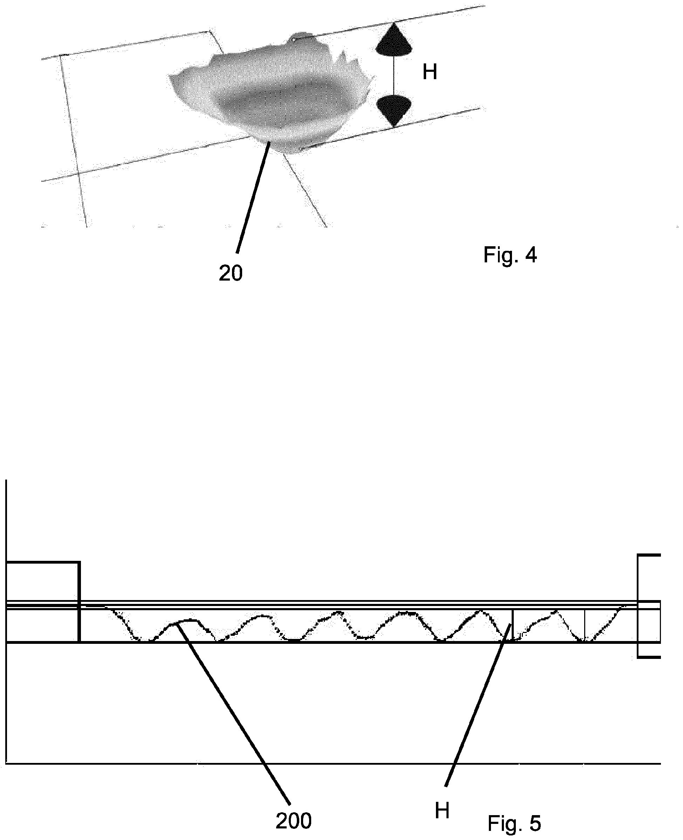

Hierzu ist es beispielsweise möglich, wie in Figur 4 dargestellt, in der dreidimensionalen Abbildung gemäß Figur 3 anhand der Form jeder einzelnen Vertiefung 20 den höchsten und tiefsten Punkt der Vertiefung 20 zu bestimmen und hieraus den Höhenunterschied H zu ermitteln, der sodann mit dem vorbestimmten Sollbereich verglichen wird.

Alternativ kann gemäß Darstellung in Figur 5 auch in regelmäßigen Abständen über die Ausdehnung der 3-dimensionalen Abbildung ein Querschnittsprofil 200 erstellt werden, wobei anschließend aus dem Querschnittsprofil 200 die einzelnen Höhenunterschiede H der Vertiefungen im Querschnitt mit dem Sollbereich verglichen werden.

In jedem Fall kann durch Betrachtung jeder einzelnen Vertiefung 20 bzw. aller erstellten Querschnittsprofile 200 der Höhenunterschied der in der Markierung enthaltenen Vertiefungen 20 zur angrenzenden Reifenoberfläche gemessen und mit dem vorbestimmten Sollbereich verglichen werden, um festzustellen, ob der gravierte QR Code die Sollbereichsvorgabe erfüllt, d. h. dass jede einzelne Vertiefung 20 in einer ausreichenden Tiefe in die Reifenoberfläche eingraviert worden ist, um den gewünschten Kontrast für einen maschinenlesbaren QR Code sicherzustellen und darüber hinaus auch keine zu stark ausgeführte Tiefe aufweist, die eine strukturelle Beschädigung des Reifens im Bereich der Oberfläche hervorrufen könnte.

Das vorangehend erläuterte Verfahren kann mit einfachen Messgeräten in kürzester Zeit durchgeführt werden und eignet sich somit für die Qualitätskontrolle im laufenden Herstellungsverfahren von Fahrzeugreifen.

### Bezugszeichenliste:

- 1:: Fahrzeugluftreifen
- 2:: Markierung
- 20:: Vertiefung
- 200:: Querschnittsprofil
- H:: Höhenunterschied

## Patentansprüche

1. Verfahren zur Prüfung von gravierten QR Codes auf Oberflächen von Reifenteilen, wobei der QR Code eine Markierung (2) mit einer Vielzahl von definierten Vertiefungen (20) in der Reifenoberfläche umfasst, die gegenüber der angrenzenden Reifenoberfläche einen Kontrast als maschinenlesbarer QR Code erzeugen, **dadurch gekennzeichnet, dass** auf die den QR Code bildende Markierung (2) ein Muster aus Lichtstreifen projiziert und das projizierte Muster nach dem Prinzip der Streifenlichtprojektion von mindestens einer Kamera aufgenommen und daraus ein Höhenprofil des Musters (2) erzeugt wird, wobei der Höhenunterschied (H) der enthaltenen Vertiefungen (20) zur angrenzenden Reifenoberfläche gemessen und mit einem vorbestimmten Sollbereich verglichen werden.

2. Verfahren nach Anspruch 1, **dadurch gekennzeichnet, dass** das Muster aus Lichtstreifen als Abfolge einzelner Lichtstreifen auf die Markierung (2) projiziert wird.

3. Verfahren nach Anspruch 1 oder 2, **dadurch gekennzeichnet, dass** das erzeugte Höhenprofil einer Korrekturberechnung zur Eliminierung von durch die Krümmung der Reifenoberfläche im Bereich der Markierung (2) bedingten Höhenunterschieden unterworfen wird und anschließend eine lediglich die Vertiefungen (20) umfassende dreidimensionale Abbildung der Markierung (2) erzeugt und die einzelnen Höhenunterschiede (H) mit dem Sollbereich verglichen werden.

4. Verfahren nach Anspruch 3, **dadurch gekennzeichnet, dass** in der dreidimensionalen Abbildung der höchste und tiefste Punkt jeder Vertiefung und daraus der Höhenunterschied (H) ermittelt und mit dem Sollbereich verglichen wird.

5. Verfahren nach Anspruch 3, **dadurch gekennzeichnet, dass** die dreidimensionale Abbildung in eine regelmäßige Abfolge von Querschnittsprofilen (200) zerlegt und die einzelnen Höhenunterschiede (H) der Vertiefungen (20) in den Querschnittprofilen (200) mit dem Sollbereich verglichen werden.

6. Verfahren nach einem der Ansprüche 1 bis 5, **dadurch gekennzeichnet, dass** aus dem Höhenprofil des Musters (2) ein QR Code berechnet und mit dem vorgegeben QR Code verglichen wird.

## Claims

1. Method for checking engraved QR codes on surfaces of tyre parts, the QR code comprising a marking (2) with a multiplicity of defined depressions (20) in the surface of the tyre, which produce a contrast with respect to the adjacent surface of the tyre as a machine-readable QR code, **characterized in that** a pattern of bands of light is projected onto the marking (2) forming the QR code and the projected pattern is recorded by at least one camera on the principle of structured light projection and a height profile of the pattern (2) is generated from it, the difference in height (H) of the depressions (20) contained being measured in relation to the adjacent surface of the tyre and compared with a predetermined target region.

2. Method according to Claim 1, **characterized in that** the pattern of bands of light is projected onto the marking (2) as a sequence of individual bands of light.

3. Method according to Claim 1 or 2, **characterized in that** the height profile generated is subjected to a corrective calculation to eliminate differences in height caused by the curvature of the surface of the tyre in the region of the marking (2), and a three-dimensional imaging of the marking (2) just comprising the depressions (20) is subsequently generated and individual differences in height (H) are compared with the target region.

4. Method according to Claim 3, **characterized in that**, in the three-dimensional imaging, the highest point and lowest point of each depression and from it the difference in height (H) is determined and compared with the target region.

5. Method according to Claim 3, **characterized in that** the three-dimensional imaging is broken down into a regular sequence of cross-sectional profiles (200), and the individual differences in height (H) of the depressions (20) in the cross-sectional profiles (200) are compared with the target region.

6. Method according to one of Claims 1 to 5, **characterized in that** a QR code is calculated from the height profile of the pattern (2) and is compared with the specified QR code.

## Revendications

1. Procédé de vérification de codes QR gravés sur les surfaces de parties de pneumatiques, le code QR comprenant un marquage (2) pourvu d'un grand nombre de creux définis (20), ménagés dans la surface de pneumatique, qui produisent un contraste sous forme de code QR lisible par machine par rapport à la surface de pneumatique adjacente, **caractérisé en ce qu'**un motif de bandes de lumière est projeté sur le marquage (2) formant le code QR et le motif projeté est capturé par au moins une caméra suivant le principe de projection de lumière en bandes, ce qui permet de générer un profil en hauteur du motif (2), la différence de hauteur (H) des creux (20) contenus relativement à la surface de pneumatique adjacente étant mesurée et comparée à une zone cible prédéterminée.

2. Procédé selon la revendication 1, **caractérisé en ce que** le motif de bandes de lumière est projeté sur le marquage (2) sous la forme d'une séquence de bandes de lumière individuelles.

3. Procédé selon la revendication 1 ou 2, **caractérisé en ce que** le profil de hauteur généré est soumis à un calcul de correction afin d'éliminer les différences de hauteur dues à la courbure de la surface de pneumatique dans la zone du marquage (2) puis une reproduction tridimensionnelle, comprenant uniquement les creux (20), du marquage (2) est générée et les différences de hauteur individuelles (H) sont comparées à la zone cible.

4. Procédé selon la revendication 3, **caractérisé en ce que** le point le plus haut et le point le plus bas de chaque creux et à partir de là la différence de hauteur (H) sont déterminés dans la reproduction tridimensionnelle et comparés à la zone cible.

5. Procédé selon la revendication 3, **caractérisé en ce que** la reproduction tridimensionnelle est décomposée en une séquence régulière de profils en coupe transversale (200) et les différences de hauteur individuelles (H) des creux (20) dans les profils en coupe transversale (200) sont comparées à la zone cible.

6. Procédé selon l'une des revendications 1 à 5, **caractérisé en ce qu'**un code QR est calculé à partir du profil en hauteur du motif (2) et comparé au code QR spécifié.
